# EUROPEAN PATENT SPECIFICATION

(11) **EP 1 035 275 B1**
(45) Date of publication and mention of the grant of the patent: **22.08.2007**
(21) Application number: 00200864.7
(22) Date of filing: 10.03.2000
(51) Int. Cl.: E04H 17/16, B23Q 11/08, F16P 1/00

(54) **Screening structure**
Schutzabdeckung
Ecran de protection

(30) Priority: 12.03.1999 NL 1011550
(43) Date of publication of application: 13.09.2000
(73) Proprietor: Hannessen, Pieter Gerrit, 3843 JK Harderwijk (NL)
(72) Inventor: Hannessen, Pieter Gerrit, 3843 JK Harderwijk (NL)
(74) Representative: Van Someren, Petronella F. H. M.

(56) References cited:
- DE-A- 3 515 669
- DE-A- 4 416 722
- DE-U- 29 714 539
- FR-A- 2 382 566
- FR-A- 2 555 639
- FR-A- 2 606 817
- US-A- 4 981 225
- US-A- 5 730 426

## Description

The present invention relates to a screening structure for a machine, installation, robot, warehouse, space or the like, constructed from posts and part-sections each fixed to two posts, wherein each part-section comprises at least two beams, a piece of screening material, and means for spacing the beams, the means being formed by the posts, wherein said piece of screening material is fixed to said beams and in that the two sides of the screening material directed toward the posts are non-fixed sides, free from the posts.

Such a screening structure is arranged for instance around a machine, installation or robot to protect operatives against working parts of the machine, installation or robot. The screening structure can also serve as partition wall for a warehouse, space or the like.

A screening structure of the preamble of claim 1 is known from FR-A-2 382 566. Each part-section consists of a piece of screening material and an upper horizontal beam which encloses the upper side of the screening material. The screening material consists of a grid of horizontal and vertical bars. In order to provide a sufficient solid screening structure, the horizontal bars of the screening material are inserted into tubes provided in holes in the posts.

Another screening structure known from the prior art is constructed from posts and part-sections each fixed to two posts, wherein each part-section comprises a framework and a piece of screening material arranged therein. Means for spacing the beams are formed by the vertical bars of the framework. The part-section is fixed to the posts with the bars of the framework. A drawback to such a screening structure is that it is difficult to adapt when the machine, installation or robot is modified. The dimensions of the framework of the part-section are a limiting factor during adaptation.

In the screening structure known from FR-A-2 382 566, the screening material is attached to the posts, be it that an additional reinforcement tube is placed over the uppermost or lowermost horizontal bar to reinforce the structure. At least the lowermost or uppermost horizontal bar of the screening material must be exactly aligned with the openings provided in the postings order to attach the screening material to the posts. When the bars are not exactly aligned with openings, the screening material cannot be attached to the post. This restricts the screening structures to a structure to a structure with horizontal bars being spaced so as to precisely fit into the openings in the parts

A further drawback of the known screening structures is that the ends of the horizontal bars directed toward the posts must have a certain minimum distance, since the ends of the horizontal bare are to be inserted into the tubelets (tronçons de tube de connexion 11) in order to attach the screening material. This implies that the possibilities for adapting the structure to a new situation by sawing through the parts section with saw are restricted.

It is an object of the present invention to provide a screening structure wherein the above-identified drawbacks have been obviated.

Another objective of the present invention is to provide a screening structure which can be manufactured and assembled inexpensively and simply.

This object is achieved in a screening structure as claimed in present claim 1 and the method of adapting a screening structure as claimed in claim 11. Because of the fact that the beams may be fixed at any position to the screening material, the beams can always be attached to the posts, independently of the positions of the openings in the posts. Furthermore, because the beams are fixed to the screening material and the sides directed toward the posts are free from the posts, one can early adapt the structure in case of a modification of the machine, an installation, et cetera enclosed by the screening structure. By fixing the beams to the posts by means of fixing members which co-act with hollow embodied ends of the beams, and wherein at least the ends of the beams are provided with internal screw thread, the screening structure according to the present invention can be easily assembled and adapted.

In the screening structure according to the present invention the means for spacing the beams are formed by the posts. The posts hereby form together with the beams a framework for enclosing the piece of screening material, whereby the vertical bars become superfluous and can be omitted. Material is thus saved, resulting in lower manufacturing costs.

The beams between the posts are fixed to the posts by means of fixing members. The ends of the beams are used to fix the part-section to two posts.

The edges of the piece of screening material directed toward the posts preferably lie substantially against a side of the posts lying transversely of the plane of the screening structure. This prevents the possibility of injuries from freely protruding edges of the piece of screening material. This is particularly important when reinforcing steel mats or other wire mesh structure are used as screening material.

In the invention the fixing members co-act with the hollow embodied ends of the beams. In this manner a simple fixing of the part-section to the posts is obtained, which simplifies assembly.

The beams are in that case preferably tubular profiles, these profiles being simple and inexpensive to manufacture.

The fixing members can be formed by self-tappers or screws. At least the ends of the beams are provided with internal screw thread for fixing the beams to the posts by means of screws.

In a preferred embodiment the posts are U-shaped profiles. In addition to these profiles being inexpensive and simple to manufacture, they provide access to the inside of the post to facilitate the fixing between beams and posts.

There are preferably provided means for tensioning the piece of screening material in the plane of the screening structure. When the piece of screening material consists of relatively limp material, the screening material, which is only arranged between two beams, can be tensioned into a flat state by means of the tensioning means.

The tensioning means preferably comprise at least one engaging member which engages on the upper beam, and at least one length-adjustable spacer arranged between the engaging member and the upper portion of the post. By adjusting the length-adjustable spacer the upper beam is placed closer to the upper end of the post, and thus at a greater distance from the lower beam, wherein the piece of screening material is tensioned between the two beams.

In order to prevent bulging of the piece of screening material, at least one intermediate beam situated between the beams can be arranged on the piece of screening material and fixed to the posts.

The present invention will be further elucidated hereinbelow with reference to the annexed drawings. In the drawings:
fig. 1 shows a perspective view of a part of a screening structure according to the present invention,
fig. 2 shows a detail view of an embodiment of an attachment between a part-section and a post according to the invention,
fig. 3 is a detail view of a second embodiment of an attachment according to the invention, and
fig. 4 is a detail view of the upper portion of a part of the screening structure provided with tensioning means according to the invention.

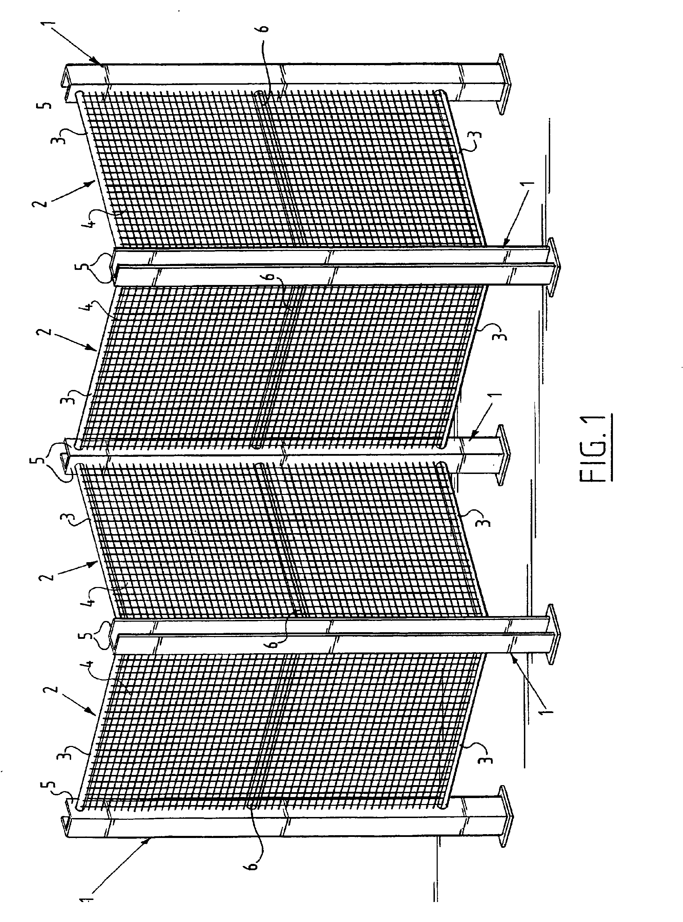

Fig. 1 shows a part of a screening structure for a machine, installation, robot, warehouse, space or the like according to the present invention. The screening structure is constructed from posts 1 and part-sections 2 each fixed between two posts 1. Each part-section 2 comprises two beams 3 and a piece of screening material 4 arranged therebetween. In the embodiment of fig. 1 the piece of screening material 4 is formed by wire netting, although it will be apparent that any material serving as screening structure can be applied. Examples hereof are a reinforcing steel mat, a wire mesh structure, a grid of any suitable material or glass.

The piece of screening material 4 is fixed to beams 3 on two opposite sides thereof, and beams 3 are in turn fixed with the ends thereof to posts 1. However, the two sides of the piece of screening material 4 directed toward the posts are not fixed. Nor is this necessary, since posts 1 ensure that beams 3 with the screening material 4 arranged therebetween are spaced apart. The non-fixed, free edges of the piece of screening material 4 lie practically against a side 5 of posts 1 situated transversely of the plane of the screening structure. This prevents the possibility of anyone being injured on protruding parts, for instance protruding metal wires, of the piece of screening material 4.

As stated above, posts 1 ensure that beams 3 are spaced apart, wherein the piece of screening material 4 lies in a flat state between posts 1 and beams 3. In order to obviate possible bulging of the piece of screening material 4 an intermediate beam 6 situated between beams 3 can be arranged on the piece of screening material 4, which intermediate beam 6 is likewise fixed to posts 1.

In the embodiment of fig. 1 posts 1 are U-shaped profiles. The advantage of U-shaped profiles, in addition to being profiles which are relatively inexpensive and simple to manufacture, is that they provide access to the inside of the profile. A part-section can hereby be fixed to each of the three sides of post 1 so that any desired configuration of screening structure can be obtained.

Fig. 2 shows a first embodiment of an attachment between beams 3 and post 1 according to the invention. Beams 3 are tubular profiles, wherein the hollow ends of beams 3 co-act with self-tappers 7. Openings 8 are arranged in post 1 close to the top and the bottom (not shown). For fixing purposes the beams 3 are arranged with the ends thereof against side 5 of post 1 such that the cavities of beams 3 lie in line with the openings 8 arranged in this side 5. Via the inside of the U-shaped post 1 self-tappers 7 are then arranged through openings 8 and in the cavities of beams 3. Finally, the self-tappers are tightened using a tool such that part-section 2 is fixed to post 1. The same takes place on the other side of part-section 2 in order to fix part-section 2 between two posts.

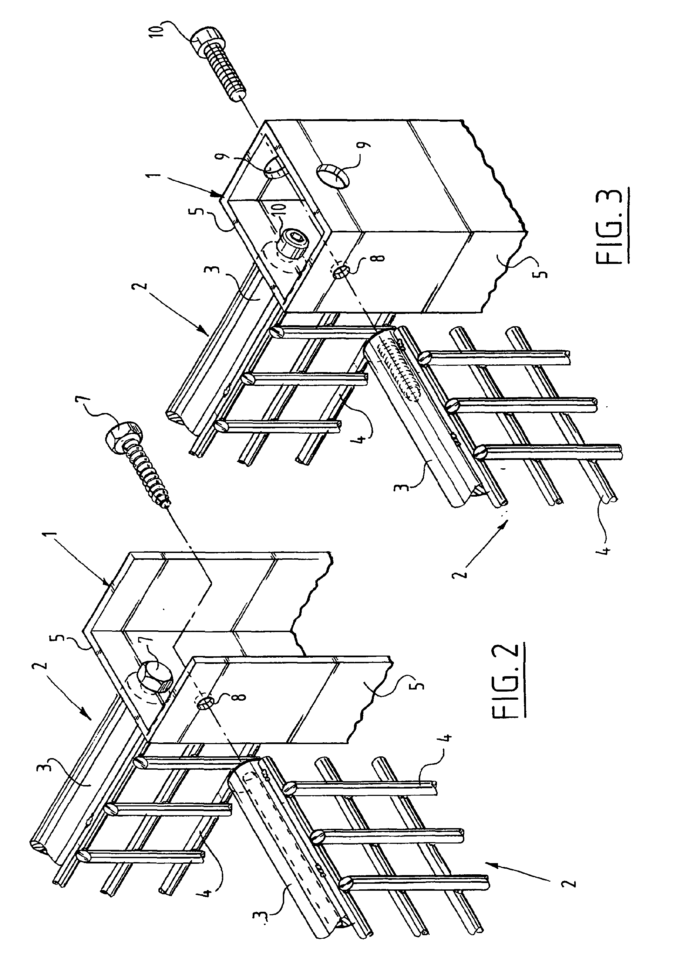

In fig. 3 is shown a second embodiment of an attachment between beams 3 and posts 1 according to the present invention. In this embodiment the post is a rectangular tube profile, wherein in the walls of post 1 situated opposite openings 8 access holes 9 are arranged in line with openings 8. Through these access holes 9 fixing members can be arranged through openings 8 into beams 3 and a tool can be inserted for tightening the fixing elements. In contrast to the embodiment shown in fig. 2, the fixing members are formed in this embodiment by screws 10 which co-act with the ends of beams 3 provided with internal screw thread.

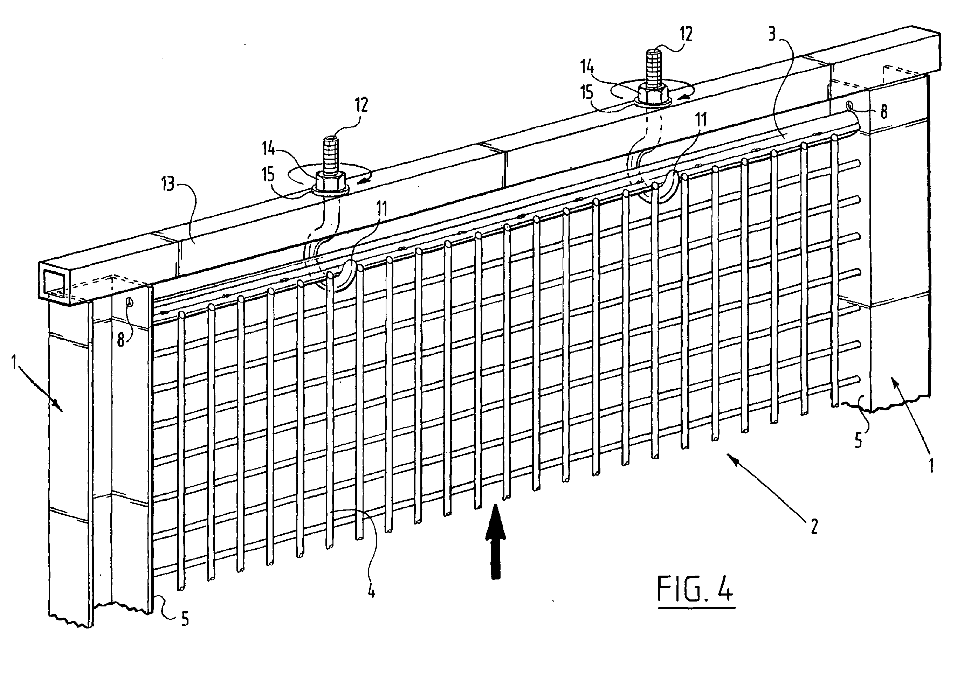

Fig. 4 shows a detail view of the upper portion of a part of a screening structure which is provided with tensioning means according to the invention. The tensioning means comprise two engaging members 11 in the form of hooks, which engage on upper beam 3. In addition, the tensioning means comprise two length-adjustable spacers 12 in the form of the ends 12, provided with screw thread, of hooks 11 which are arranged via a connecting tube 13 between engaging members 11 and upper portions of posts 1. Onto the ends of hooks 11 are screwed nuts 14 which rest via a ring 15 on the top side of connecting tube 13. As the nuts 14 are further tightened the lengths of spacers 12, and thus the distance between the top side of connecting tube 13 and the upper beam of part-section 2 will decrease and the piece of screening material 4 will be tensioned in the plane of the screening structure.

The screening structure according to the present invention is constructed from components which are relatively inexpensive to manufacture. In addition, the screening structure is simple to assemble, and also simple to adapt in the case of a possible modification of the machine, installation, robot, warehouse, space or the like enclosed by the screening structure. In order to adapt the screening structure a post with part-section can be removed from or added to the screening structure. It is also possible to shorten a part-section between two posts by sawing through the part-section with a circular saw, wherein the "new" ends of the beams are fixed to the post.

## Claims

1. Screening structure for a machine, installation, robot, warehouse, space or the like, constructed, from posts and part-sections (2) each fixed to two posts (1), wherein each part-section (2) comprises at least two beams (3) and a piece of screening material (4) arranged therebetween, the posts (1) spacing said beams (3), wherein said piece of screening material (4) is fixed to said beams (3) and wherein the two sides of the screening material (4) directed toward the posts (1) are non-fixed sides, free from the posts (1), **characterized in that** the beams (3) between the posts (1) are fixed to the posts (1) by means of fixing members (7, 10) which co-act with hollow embodied ends of the beams, wherein at least the ends of the beams (3) are provided with internal screw thread.

2. Screening structure as claimed in claim 1, wherein said edges of the piece of screening material (4) lie substantially against a side (5) of the posts (1) lying transversely of the plane of the screening structure.

3. Screening structure as claimed in claim 1 or 2, wherein each fixing member is adapted so as to fix one beam end only.

4. Screening structure as claimed in any of the foregoing claims, wherein a post (1) is shaped so as to include at least three sides, and the fixing members (7, 10) are adapted so as to fix a first beam (3) to a first side and a second beam (3) to a second side, the first side extending perpendicularly to the second side.

5. Screening structure as claimed in any of the foregoing claims, wherein the beams are arranged with their ends against a side (5) of a post (1).

6. Screening structure as claimed in any of the foregoing claims, wherein the beams (3) are tubular profiles.

7. Screening structure as claimed in any of the foregoing claims, wherein the posts (1) are U-shaped profiles.

8. Screening structure as claimed in any of the foregoing claims, wherein there are provided means for tensioning the piece of screening material in the plane of the screening structure.

9. Screening structure as claimed in claim 8, wherein the tensioning means comprise at least one engaging member (11) which engages on the upper beam (3), and at least one length-adjustable spacer (12) arranged between the engaging member (11) and the upper portion of the post (1).

10. Screening structure as claimed in any of the foregoing claims, wherein at least one intermediate beam (6) situated between the beams (3) is arranged on the piece of screening material (4) and fixed to the posts (1).

11. Method of adapting a screening for a machine, installation, robot, warehouse, space or the like, e.g. removing or adding a screening part, said method comprising the steps of:
- arranging a screening structure constructed from posts and part-sections (2);
- fixing each part-section (2) to two posts (1), each part-section (2) comprising at least two beams (3) and a piece of screening material (4) arranged therebetween;
- fixing said piece of screening material (4) to said beams (3) only, wherein the two sides of the screening material (4) directed toward the posts (1) are non-fixed and free from the posts (1), wherein the beams (3) of the part-section (2) are fixed to the posts (1) by means of fixing members (7, 10) which co-act with hollow embodied ends of the beams, and wherein at least the ends of the beams (3) are provided with internal screw thread;
- removing a post with a part-section from the screening structure by releasing the part-section (2) from the posts or adding a post with a part-section to the screening structure by fixing the part-section (2) to the posts.

12. Method according to claim 11, further comprising the step of tensioning by tensioning means the screening material (4) into a substantially flat state in a plane of the screening structure.

13. Method according to claim 11 or 12, wherein a screening structure according to any of claims 1-10 is used.

## Patentansprüche

1. Schutzabdeckung für eine Maschine, eine Installation, einen Roboter, ein Lager, einen Raum oder dergleichen, aufgebaut aus Pfosten und Teilabschnitten (2), die jeweils an zwei Pfosten (1) befestigt sind, wobei jeder Teilabschnitt (2) wenigstens zwei Streben (3) und ein Stück Abschirmmaterial (4), das dazwischen angeordnet ist, aufweist, wobei die Pfosten (1) die Streben (3) beabstandet halten, wobei das Stück Abschirmmaterial (4) an den Streben (3) befestigt ist und wobei die zwei Seiten des Abschirmmaterials (4), die auf die Pfosten (1) gerichtet sind, nicht befestigte, von den Pfosten (1) freie Seiten sind, **dadurch gekennzeichnet, dass** die Streben (3) zwischen den Pfosten (1) an den Pfosten (1) mittels Befestigungselementen (7, 10) befestigt sind, die mit hohl ausgebildeten Enden der Streben zusammenwirken, wobei wenigstens die Enden der Streben (3) mit Innengewinden versehen sind.

2. Schutzabdeckung nach Anspruch 1, wobei die Kanten des Stückes Abschirmmaterial (4) im Wesentlichen an einer Seite (5) der Pfosten (1) anliegen, die quer zur Ebene der Schutzabdeckung liegt.

3. Schutzabdeckung nach Anspruch 1 oder 2, wobei jedes Befestigungselement so ausgebildet ist, dass es nur ein Strebenende befestigen kann.

4. Schutzabdeckung nach einem der vorstehenden Ansprüche, wobei ein Pfosten (1) so geformt ist, dass er wenigstens drei Seiten aufweist und die Befestigungselemente (7, 10) so ausgebildet sind, dass sie eine erste Strebe (3) an einer ersten Seite und eine zweite Strebe (3) an einer zweiten Seite befestigen können, wobei die erste Seite rechtwinklig zur zweiten Seite liegt.

5. Schutzabdeckung nach einem der vorstehenden Ansprüche, wobei die Streben mit ihren Enden an einer Seite (5) eines Pfostens (1) angeordnet sind.

6. Schutzabdeckung nach einem der vorstehenden Ansprüche, wobei die Streben (3) rohrförmige Profile sind.

7. Schutzabdeckung nach einem der vorstehenden Ansprüche, wobei die Pfosten (1) U-förmige Profile sind.

8. Schutzabdeckung nach einem der vorstehenden Ansprüche, wobei in der Ebene der Schutzabdeckung Mittel zum Spannen des Stücks Abschirmmaterial vorgesehen sind.

9. Schutzabdeckung nach Anspruch 8, wobei die Spannmittel wenigstens ein Eingriffselement (11) aufweisen, das mit der oberen Strebe (3) in Eingriff steht, und wobei zwischen dem Eingriffselement (11) und dem oberen Teil des Pfostens (1) wenigstens ein längeneinstellbares Abstandsstück (12) angeordnet ist.

10. Schutzabdeckung nach einem der vorstehenden Ansprüche, wobei zwischen den Streben (3) an dem Stück Abschirmmaterial (4) wenigstens eine Zwischenstrebe (6) angeordnet und an dem Pfosten (1) befestigt ist.

11. Verfahren zur Anpassung einer Abdeckung für eine Maschine, eine Installation, einen Roboter, ein Lager, einen Raum oder dergleichen, beispielsweise durch Entfernen oder Hinzufügen eines Abdeckteils, wobei das Verfahren die Schritte aufweist:
- Anordnen einer Schutzabdeckung, die aus Pfosten und Teilabschnitten (2) aufgebaut ist;
- Befestigen jedes Teilabschnitts (2) an zwei Pfosten (1), wobei jeder Teilabschnitt (2) wenigstens zwei Streben (3) und ein dazwischen angeordnetes Stück Abschirmmaterial (4) aufweist;
- Befestigen des Stücks Abschirmmaterial (4) lediglich an den Streben (3), wobei die zwei Seiten des Abschirmmaterials (4), welche auf die Pfosten (1) gerichtet sind, nicht befestigt sind und gegenüber dem Pfosten (1) frei sind, wobei die Streben (3) des Teilabschnitts (2) an den Pfosten (1) mittels Befestigungselementen (7, 10) befestigt sind, die mit hohl ausgebildeten Enden der Streben zusammenwirken, und wobei wenigstens die Enden der Streben (3) mit Innengewinden versehen sind;
- Entfernen eines Pfostens mit einem Teilabschnitt von der Schutzabdeckung durch Lösen des Teilabschnitts (2) von den Pfosten oder Hinzufügen eines Pfostens mit einem Teilabschnitt zu der Schutzabdeckung durch Befestigen eines Teilabschnitts (2) an den Pfosten.

12. Verfahren nach Anspruch 11, weiterhin mit dem Schritt Spannen des Abschirmmaterials (4) mittels Spannmitteln in einem im Wesentlichen ebenen Zustand in einer Ebene der Schutzabdeckung.

13. Verfahren nach Anspruch 11 oder 12, wobei eine Schutzabdeckung gemäß einem der Ansprüche 1 bis 10 verwendet wird.

## Revendications

1. Structure de criblage pour une machine, une installation, un robot, un entrepôt, un espace ou similaire, construite, à partir de montants et de sections partielles (2), chacune étant fixée aux deux montants (1), dans laquelle chaque section partielle (2) comprend au moins deux poutrelles (3) et un morceau de matériau de criblage (4), disposé entre elles, les montants (1) espaçant lesdites poutrelles (3), dans laquelle ledit morceau de matériau de criblage (4) est fixé auxdites poutrelles (3) et dans laquelle les deux côtés du matériau de criblage (4) dirigés vers les montants (1) sont des côtés non fixés, libérés des montants (1), **caractérisée en ce que** les poutrelles (3) entre les montants (1) sont fixées aux montants (1) au moyen d'éléments de fixation (7, 0) qui co-agissent avec des extrémités creuses des poutrelles, dans lesquelles au moins les extrémités des poutrelles (3) sont dotées d'un filet de vis interne.

2. Structure de criblage selon la revendication 1, dans laquelle lesdits bords du morceau de matériau de criblage (4) se trouvent sensiblement contre un côté (5) des montants (1) se trouvant transversalement par rapport au plan de la structure de criblage.

3. Structure de criblage selon la revendication 1 ou 2, dans laquelle chaque élément de fixation est adapté de façon à fixer une extrémité de poutrelle seulement.

4. Structure de criblage selon l'une quelconque des revendications précédentes, dans laquelle un montant (1) est façonné de façon à inclure au moins trois côtés, et les éléments de fixation (7, 10) sont adaptés de façon à fixer une première poutrelle (3) à un premier côté et une seconde poutrelle (3) à un second côté, le premier côté s'étendant perpendiculairement au second côté.

5. Structure de criblage selon l'une quelconque des revendications précédentes, dans laquelle les poutrelles sont disposées avec leurs extrémités contre un côté (5) d'un montant (1).

6. Structure de criblage selon l'une quelconque des revendications précédentes, dans laquelle les poutrelles (3) sont des profils tubulaires.

7. Structure de criblage selon l'une quelconque des revendications précédentes, dans laquelle les montants (1) sont des profilés en forme de U.

8. Structures de criblage selon l'une quelconque des revendications précédentes, dans lesquelles des moyens pour tendre le morceau de matériau de criblage sont fournis dans le plan de la structure de criblage.

9. Structure de criblage selon la revendication 8, dans laquelle les moyens de tension comprennent au moins un élément de fixation (11) qui se met en prise sur la poutrelle supérieure (3) et au moins un espace ajustable en longueur (12) disposé entre l'élément de prise (11) et la partie supérieure du montant (1).

10. Structure de criblage selon l'une quelconque des revendications précédentes, dans laquelle au moins une poutrelle intermédiaire (6) située entre les poutrelles (3) est disposée sur le morceau du matériau de criblage (4) et fixée aux montants (1).

11. Procédé d'adaptation d'un crible pour une machine, une installation, un robot, un entrepôt, un espace ou similaire, par exemple, en enlevant ou en ajoutant une pièce de criblage, ledit procédé comprenant les étapes consistant à :
- disposer une structure de criblage construite à partir de montants et sections partielles (2) ;
- fixer chaque section partielle (2) aux deux montants (1), chaque section partielle (2) comprenant au moins deux poutrelles (3) et un morceau de matériau de criblage (4) disposé entre elles ;
- fixer ledit morceau de matériau de criblage (4) auxdites poutrelles (3) uniquement, dans lesquelles les deux côtés du matériau de criblage (4) dirigés vers les montants (1) ne sont pas fixés et sont libérés des montants (1), dans lesquels les poutrelles (3) de la section partielle (2) sont fixées aux montants (1) au moyen d'éléments de fixation (7, 10) qui co-agissent avec des extrémités creuses des poutrelles, et dans lesquels au moins les extrémités des poutrelles (3) sont dotées d'un filet de vis interne ;
- enlever un montant avec une section partielle de la structure de criblage en libérant la section partielle (2) des montants ou en ajoutant un montant avec une section partielle à la structure de criblage en fixant la section partielle (2) aux montants.

12. Procédé selon la revendication 11, comprenant en outre la phase de tension par des moyens de tension du matériau de criblage dans un état sensiblement plat dans un plan de la structure de criblage.

13. Procédé selon la revendication 11 ou 12, dans lequel une structure de criblage selon l'une quelconque des revendications 1 à 10 est utilisée.
